# DEMANDE DE BREVET EUROPEEN

(11) **EP 1 725 058 A1**
(43) Date de publication de la demande: **22.11.2006**
(21) Numéro de dépôt: 06300133.3
(22) Date de dépôt: 14.02.2006
(51) Int. Cl.: H04Q 7/34

(54) **Procédé de mesure de la qualité d'une communication mise en oeuvre à partir d'un terminal mobile**

(30) Priorité: 18.05.2005 FR 0551290
(71) Demandeur: Societé Française du Radiotéléphone, 92915 Paris la Défense Cedex (FR)
(72) Inventeur: Gicquel, Benoît, 78230, LE PECQ (FR)
(74) Mandataire: Schmit, Christian Norbert Marie

(57) **Abrégé**

Pour pouvoir gérer plus efficacement un réseau de téléphonie mobile, l'opérateur gérant le réseau propose à une partie de ses abonnés de remplir (206) un formulaire d'appréciation après une tentative (201) d'établissement d'une communication. Les réponses à ce formulaire sont associées à des données de localisation et temporelles pour produire un message de qualité qui est envoyé (209) à un serveur de traitement. Dans une variante le message de qualité comporte aussi des informations techniques produites (205) au cours de la communication.

## Description

L'invention a pour objet un procédé de mesure de la qualité d'une communication mise en oeuvre à partir d'un terminal mobile. Le domaine de l'invention est celui de la téléphonie mobile et plus particulièrement celui de la mesure de la qualité de communications réalisées à partir d'un terminal de téléphonie mobile.

Un but de l'invention est de permettre à un opérateur de téléphonie mobile d'obtenir des appréciations localisées de ses abonnés sur la base des dernières communications effectuées.

Dans l'état de la technique on connaît des méthodes de sondage de la qualité d'un réseau consistant à envoyer des sondeurs équipés d'un terminal effectuer des appels dans une zone pour laquelle un opérateur souhaite effectuer des mesures. Parmi les inconvénients de ce mode opératoire on peut au moins en citer trois qui sont particulièrement handicapants. Un premier inconvénient est que la qualité mesurée ne représente qu'une photo sur un parcours de mesure donné: en fait, seuls les parcours et les lieux les plus accessibles sont mesurés et, entre deux mesures, la qualité peut se dégrader. Un deuxième inconvénient de ce mode de sondage est que les appels réalisés sont standardisés et les terminaux des sondeurs sur sollicités: dans la réalité les appels ne durent pas tous 2 minutes et sont en outre passés avec des temps inter-appels variables et beaucoup plus grands. En d'autres termes l'opérateur sondant son réseau obtient l'avis de professionnels alors qu'il cherche à connaître l'avis de ses utilisateurs. Un troisième inconvénient de ce mode de sondage est que les sondeurs effectuent des appels en continu ce qui a pour effet de fausser leur perception de la qualité. En effet, passer plus d'une centaine d'appels dans une même journée amène une fatigue nuisant à la perception de la qualité d'un appel.

Les techniques de sondage utilisées sont donc peu adaptées à la production d'un résultat exploitable par un opérateur pour augmenter le taux de satisfaction de ses clients.

Dans l'état de la technique on connaît aussi des mesures techniques réalisées par le réseau lui-même. Ces mesures sont réalisées à l'aide de compteurs, par exemple du nombre d'appels, du nombre de "hand-over", du nombre de coupures, etc...., la liste n'étant pas exhaustive. La précision maximum de ces compteurs est de l'ordre duu quart d'heure pour une cellule. Dans la mesure où la majorité des appels durent moins d'une minute et peuvent mettre en oeuvre plusieurs cellules (cas des appels en mobilité), ces compteurs ne reflètent pas la qualité d'une communication. Un autre problème est qu'on ne dispose pas de compteurs capables de restituer la qualité audio de l'appel. En fin, on ne sait pas agglomérer ces mesures de compteurs pour obtenir une estimation de la perception de la qualité d'une communication par type de terminal mobile.

Dans l'invention on résout ces problèmes en proposant, après une tentative d'établissement d'une communication ou à la fin d'une communication si la tentative d'établissement a aboutit, à l'utilisateur d'un terminal de remplir un formulaire électronique d'appréciation de la qualité de la communication. Un formulaire électronique est, par exemple, une série de questions à choix multiples s'affichant successivement sur l'écran du terminal. Le terminal mémorise les réponses à chaque question, cette mémorisation correspondant à une séquence de touches activées par l'utilisateur lors de l'affichage du questionnaire électronique. Cette séquence mémorisée constitue la réponse de l'utilisateur du terminal au questionnaire électronique. Le questionnaire est électronique car mis en oeuvre par le terminal qui est un dispositif électronique. La réponse est envoyée, via un message de qualité, par le terminal à un serveur apte à traiter ces réponses et en particulier à produire des messages d'alertes à destination d'une équipe d'intervention. Ces messages d'alertes dépendent du contenu des messages de qualité.

Dans une variante de l'invention le terminal enregistre des données techniques durant la durée de la tentative d'établissement de la communication et/ou durant l'éventuelle communication suivant la tentative. Ces données techniques sont enregistrées dans le message de qualité et transmises en même temps que lui. Ces données techniques permettent au serveur de juger de la pertinence des réponses au questionnaire électronique et aussi de corréler des informations avec la perception d'un utilisateur d'une qualité d'une communication.

L'invention a donc pour objet un procédé de mesure de la qualité d'une communication mise en oeuvre à partir d'un terminal connecté à un réseau de téléphonie mobile caractérisé en ce que :
- le terminal détecte une tentative d'établissement d'une communication depuis, ou vers, ledit terminal,
- le terminal soumet, à la fin de la communication ou de la tentative d'établissement de communication, un formulaire électronique à l'utilisateur du terminal, ledit formulaire permettant la saisie de l'appréciation de l'utilisateur relativement à la communication,
- le terminal insère les informations issues du remplissage du formulaire dans un message de qualité,
- le terminal émet le message de qualité vers un serveur de gestion de la qualité du réseau de téléphonie.

Avantageusement l'invention est aussi caractérisée en ce que le terminal insère dans le message de qualité une information de localisation du terminal au moment de la communication.

Avantageusement l'invention est aussi caractérisée en ce que le terminal insère dans le message de qualité une information de date de production dudit message de qualité.

Avantageusement l'invention est aussi caractérisée en ce que le formulaire électronique comporte une information relative à l'appréciation de la communication par un utilisateur du terminal selon laquelle la communication a été ou non réussie et/ou maintenue, le contenu de ce champ étant inséré par le terminal dans le message de qualité.

Avantageusement l'invention est aussi caractérisée en ce que le formulaire électronique comporte une information relative à l'appréciation de la communication par un utilisateur du terminal selon la perception de l'utilisateur sur une échelle comportant au moins 2 échelons.

Avantageusement l'invention est aussi caractérisée en ce que le formulaire électronique comporte une information relative à l'appréciation par l'utilisateur de la synchronisation entre le son et l'image lors d'une communication de type visiophonique.

Avantageusement l'invention est aussi caractérisée en ce que le formulaire électronique comporte une information relative à la situation du terminal selon qu'il est à l'aire libre, en intérieur, avec ou sans fenêtre, et ou à un étage.

Avantageusement l'invention est aussi caractérisée en ce que le terminal insère dans le message de qualité des informations techniques relatives à la communication et mesurées et enregistrées par le terminal durant la communication.

Avantageusement l'invention est aussi caractérisée en ce que les informations techniques comporte un identifiant du modèle du terminal.

Avantageusement l'invention est aussi caractérisée en ce que les informations techniques sont au moins parmi la liste formée de: nombre de hand-over durant la communication, identifiants des cellules traversées durant la communication, du niveau de RXLEV moyen, de la qualité RXQUAL moyenne, de la quantité MOS, de l'avance de temps moyenne, du pourcentage de taux FER supérieur à un seuil donné, de la durée de l'appel.

Avantageusement l'invention est aussi caractérisée en ce que les messages de qualité sont reçus et enregistrés sur un serveur apte à produire des messages d'alertes en fonction du contenu des messages de qualité.

Avantageusement l'invention est aussi caractérisée en ce quen pour la production des messages d'alertes, le serveur écarte les messages de qualité incohérents, un message incohérent étant identifiable au moins selon un des critères de la liste suivante : incompatibilité entre les mesures techniques et le résultat du formulaire, trop grande occurrence de messages de qualité négatifs issus d'un même abonné, trop grande quantité de messages de qualité positifs issus d'un même abonné.

L'invention sera mieux comprise à la lecture de la description qui suit et à l'examen des figures qui l'accompagnent. Celles-ci sont présentées à titre indicatif et nullement limitatif de l'invention. Les figures montrent :
Figure 1 : Une illustration de moyens mettant en oeuvre le procédé selon l'invention.
Figure 2 : Une illustration d'étapes du procédé selon l'invention.
Figure 3: Une illustration d'étapes de traitement d'un message de qualité produit par le procédé selon l'invention.

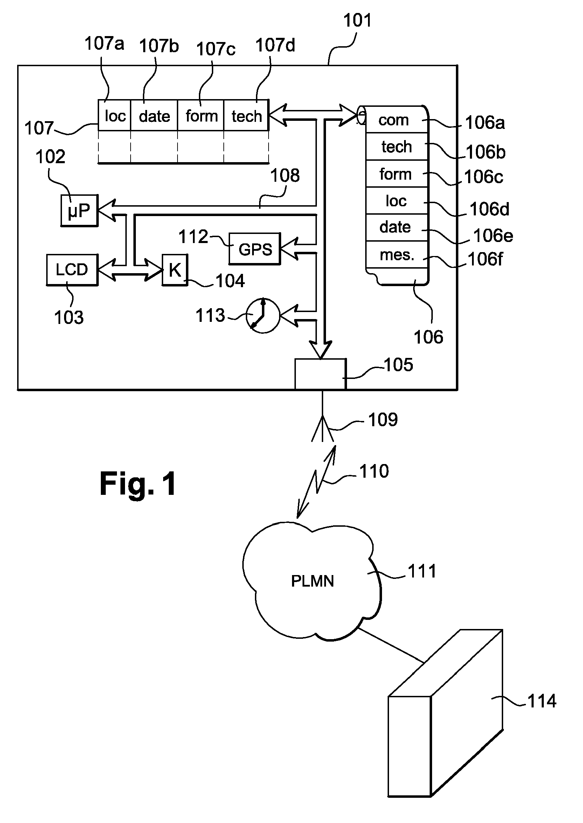

La figure 1 montre un terminal 101 comportant un microprocesseur 102, un écran 103, un clavier 104, des circuits GSM 105, une mémoire 106 de programme et une mémoire 107 de messages de qualité. Les éléments 102 à 107 sont interconnectés par un bus 108.

Dans la pratique, lorsque l'on prête une action à un dispositif, celle-ci est réalisée par un microprocesseur du dispositif commandé par des codes instructions enregistrés dans une mémoire de programme du dispositif.

La mémoire 106 est divisée en plusieurs zones, chaque zone correspondant à des codes instructions pour réaliser une fonction du dispositif. La mémoire 106 comporte une zone 106a comportant des codes instructions pour la mise en oeuvre d'une communication, qu'elle soit vocale, vidéo, ou de données. La mémoire 106 comporte une zone 106b comportant des codes instructions pour réaliser l'enregistrement de données techniques pendant la communication. La mémoire 106 comporte une zone 106c pour la présentation d'un formulaire électronique à un utilisateur du terminal 101. La mémoire comporte également une zone 106d comportant des codes instructions pour la production d'une localisation du terminal 101. La mémoire 106 comporte une zone 106e comportant des codes instructions pour la production d'une date. La mémoire 106 comporte encore une zone 106f comportant des codes instructions pour la production et l'envoi d'au moins un message de qualité.

Les circuits 105 sont connectés à une antenne 109 permettant d'établir une liaison 110 hertzienne avec un réseau de téléphonie mobile. Dans notre exemple nous considérons que les circuits 105 sont des circuits de type GSM pilotés par les codes instructions de la zone 106a. Dans la pratique les circuits 105, et donc les codes instructions de la zone 106a, peuvent correspondre à un autre standard de téléphonie parmi les standards de deuxième génération, deuxième génération et demie, troisième génération ou une génération à venir. En particulier, l'invention est tout à fait applicable au standards GPRS et UMTS.

Les codes instructions 106d permettent de produire une localisation du terminal. Une telle localisation peut par exemple être demandée à l'infrastructure du réseau auquel est connecté le terminal 101. L'infrastructure envoie alors une localisation en latitude et longitude. Une localisation peut aussi être un identifiant d'un secteur d'une station de base (ou cellule) à laquelle est connecté le terminal 101 au moment de la demande de localisation. Une localisation peut aussi être triangulée par le terminal 101 en fonction de distances estimées à des stations de bases qui sont à portée de réception du terminal 101. Encore un autre mode de production d'une localisation, celle rendant l'invention la plus efficace, est que le terminal 101 soit doté de circuits 112 GPS connectés au bus 108. Ces circuits 112 sont alors interrogés par le microprocesseur 102 mettant en oeuvre les codes instructions de la zone 106d.

Les codes instructions de la zone 106e permettent de produire une date. Dans la pratique cette date est, soit demandée à l'infrastructure du réseau par le terminal 101, soit le terminal 101 comporte une horloge 113 connectée au bus 108. L'horloge 113 est alors interrogée par le microprocesseur 102 commandé par les codes instructions de la zone 106e.

La mémoire 107 permet d'enregistrer au moins un message de qualité produit par le terminal 101. Un message de qualité comporte plusieurs champs dont au moins un champ 107a pour l'enregistrement d'une localisation à laquelle le message de qualité a été produit, un champ 107b pour l'enregistrement d'une date à laquelle le message de qualité a été produit et un champ 107c pour enregistrer les résultats du formulaire électronique résultant de la tentative d'établissement de communication ayant provoqué la production du message de qualité. Dans une variante de l'invention un message de qualité comporte aussi un champ 107d pour enregistrer les paramètres techniques de la tentative d'établissement de communication ayant provoquée la production du message de qualité.

De manière avantageuse, l'application d'évaluation de la qualité et d'affichage du questionnaire peuvent être également intégrés dans une carte SIM du terminal.

Le terminal 101 est, dans la pratique, un téléphone mobile apte à communiquer sur un réseau de téléphonie mobile, que ce réseau soit de deuxième génération, deuxième génération et demie, de troisième génération ou d'une génération à venir.

La figure 1 montre aussi qu'un serveur 114 est connecté au réseau 111 de manière à recevoir les messages de qualité émis par les terminaux du type du terminal 101, c'est-à-dire les terminaux mettant en oeuvre le procédé selon l'invention. Le serveur 101 comporte essentiellement des moyens de traitement des messages de qualité.

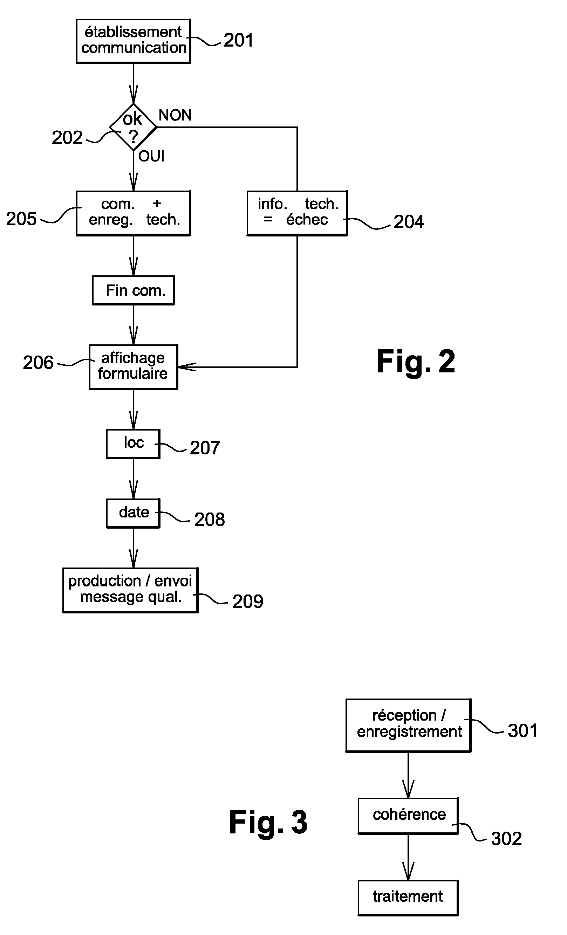

La figure 2 montre une étape 201 préliminaire dans laquelle le terminal 101 détecte une tentative d'établissement d'une communication. Le terminal détecte une tentative d'établissement d'une communication au moins en deux circonstances. La première circonstance se présentant lorsque l'utilisateur du terminal 101 cherche à émettre un appel vocal, vidéo ou de données et saisit un identifiant du terminal qu'il cherche à joindre via le clavier 104. L'utilisateur valide alors cette saisie, ce qui a pour effet de provoquer la tentative d'établissement d'une communication par le terminal 101. La seconde circonstance se présente lorsqu'un utilisateur distant cherche à joindre l'utilisateur du terminal 101. Dans ce cas également le terminal 101 cherche à établir une communication avec le terminal de l'utilisateur distant.

Dans l'étape 201 le terminal 101 initialise un message de qualité dans la mémoire 107. En effet la mémoire 107 comporte au moins tous les messages de qualité qui n'ont pas encore été envoyés au serveur 114 au moment de la tentative d'établissement de communication correspondant à l'étape 201. La mémoire 107 peut donc être amenée à contenir plusieurs messages de qualité. L'initialisation d'un message consiste à le créer dans la mémoire 107. Si cette mémoire est vue comme une table, chaque colonne correspondant à un champ, alors l'initialisation est la création d'une ligne vide dans la mémoire 107.

De l'étape 201 le terminal 101 passe à une étape 202 d'aiguillage en fonction du succès ou de l'échec de la tentative d'établissement de la communication. En cas d'échec le terminal passe à une étape 204, en cas de succès le terminal passe à une étape 205.

Dans l'étape 205 le terminal 101 met en oeuvre une communication classique, par exemple une communication vocale, une communication visiophonique ou une communication de données selon les besoins de l'utilisateur au moment de l'établissement de la communication. Le type de communication est choisi par l'utilisateur via le clavier 104.

Au cours de l'étape 205, et dans une variante préférée de l'invention, le terminal 101 effectue des mesures portant sur des paramètres techniques de la communication. Les paramètres mesurés sont, par exemple:
- le nombre de "hand-over" réalisé par le terminal 101 au cours de la communication, ce nombre étant directement lié à la mobilité de l'utilisateur du terminal 101;
- les identifiants des cellules auxquelles le terminal s'est attaché au cours de la communication;
- la quantité RXLEV correspondant au niveau, en puissance, des signaux reçus par le terminal;
- la quantité RXQUAL correspondant au taux d'erreur bit au niveau de terminal 101;
- la quantité FER correspondant au taux d'erreur trame au niveau du terminal 101;
- la quantité MOS correspondant à une synthèse de plusieurs grandeurs physiques mesurées par le terminal 101;
- l'avance de temps (tm pour time advance) imposée par le réseau au terminal 101.

Cette liste n'est ni exhaustive, ni impérative. Une mise en oeuvre particulière de l'invention peut ne considérer qu'un sous-ensemble des paramètres techniques cités.

Une information technique intéressante est le modèle du terminal 101. Dans la pratique ce modèle correspond à un code enregistré dans une mémoire du terminal 101 (basée sur l'IMEI pour le GSM). Le terminal 101 lit cette mémoire et écrit le code lu dans le champ 107d du message de qualité créé à l'étape 201.

Lorsque l'utilisateur interrompt la communication via l'activation de la touche prévue à cet effet ou lorsque que la communication est interrompue pour des raisons indépendantes de la volonté de l'utilisateur le terminal 101, passe à une étape 206 d'affichage d'un formulaire électronique.

Dans l'étape 204, le terminal 101 ajoute aux informations techniques collectées lors de la tentative d'établissement de la communication en vue de leurs transmissions au serveur 114 une information indiquant que la tentative d'établissement de la communication a échoué. Cette échec est du, par exemple, à une absence de réseau. Cette absence correspond alors aussi à une mesure technique qui est enregistrée dans le champ 107d du message de qualité créé à l'étape 201.

Dans le cas d'un appel de type données, les informations techniques comportent aussi la quantité de données transférées. Un appel de type données est par exemple la récupération ou l'émission d'un message électronique.

Les informations techniques sont enregistrées dans le champ 107d du message de qualité créé à l'étape 201.

De l'étape 204 le terminal 101 passe à l'étape 206 d'affichage du formulaire. Dans un exemple préféré un formulaire électronique correspond à une succession de questions à choix multiples posées à l'utilisateur du terminal 101 via l'écran 103. L'utilisateur utilise le clavier 104 pour répondre à ces questions. La séquence de touches activées par l'utilisateur lors de l'affichage du formulaire électronique constitue la réponse de l'utilisateur au formulaire électronique. Cette réponse est enregistrée dans le champ 107c du message de qualité créé à l'étape 201.

Dans une autre variante, le formulaire comporte des questions ouvertes auxquelles l'utilisateur du terminal peut répondre par une phrase. Dans ce cas encore la séquence de touches activées par l'utilisateur lors de l'affichage du formulaire constitue la réponse de l'utilisateur au formulaire.

Dans la pratique, chaque réponse de l'utilisateur est soumise à une validation permettant à l'utilisateur de confirmer sa réponse et de passer à la question suivante dans le formulaire. Après la dernière question du formulaire le terminal 101 passe à une étape 207 de localisation.

Un formulaire électronique est mis en oeuvre, par exemple, par une application de type navigateur Internet interprétant un fichier comportant une séquence d'instructions HTML correspondant au formulaire. Dans une autre variante, le formulaire est mis en oeuvre via une application de type java ou flash. Dans tous les cas, le, ou les formulaires sont enregistrés dans une mémoire du terminal 101. Cette mémoire est par exemple la zone 106c. Cette zone, ou une autre, comporte aussi les codes instructions correspondant à l'application interprétant la séquence d'instructions correspondante dans le formulaire.

Selon le type de communication effectuée, ou envisagée, par l'utilisateur le formulaire n'est pas le même. Le formulaire présenté à l'utilisateur dépend donc du type de communication, mais le principe de présentation et de réponse au formulaire reste le même dans tous les cas.

Dans le cas d'une communication vocale le formulaire électronique comporte, par exemple, les questions suivantes:
- Est-ce que la communication a été réussie et maintenue ? Les réponses possibles à cette question sont 0 : échouée, 1 : réussie ou 2 : réussie et maintenue. L'utilisateur est donc invité à activer l'une des touches 0, 1 ou 2 selon que la tentative d'établissement de communication a échouée, réussie mais sans lui permettre d'aller au terme de sa conversation ou encore a réussie et a été maintenue. On note qu'ici comme pour les autres questions le choix des touches est arbitraire.
- Quelle notre attribueriez-vous à la communication ? 0 : mauvaise, 1 :acceptable ou 2 : parfaite. L'exemple choisit met en oeuvre une échelle de notation à 3 échelons. Ici il est tout à fait possible d'avoir une dynamique plus faible pour la notation : bonne ou mauvaise (2 échelons). II est aussi possible d'avoir une dynamique plus grande: très bonne, bonne, moyenne, mauvaise ou très mauvaise (5 échelons). Le nombre d'échelons dans l'échelle d'appréciation est donc laissé à l'appréciation de l'opérateur utilisant le procédé selon l'invention. Dans un mode de réalisation préféré on utilise un nombre d'échelons pair ce qui oblige l'utilisateur à prendre partie entre bonne et mauvaise.
- Quelle note attribueriez-vous à la qualité audio ? Ici les réponses possibles sont les même que pour la question précédente.

Cette liste n'est ni exhaustive ni impérative.

Dans le cas d'un appel de type visiophonie le formulaire électronique comporte en plus les questions suivantes :
- Quelle note attribueriez-vous à la qualité de l'image ?
- Quelle note attribueriez-vous à la synchronisation son / image ?

Les réponses à ces questions sont les mêmes que celles décrites pour la question portant sur l'appréciation globale de la communication.

Cette liste n'est ni exhaustive ni impérative.

Dans le cas d'un appel de type données le formulaire électronique comporte en plus les questions suivantes:
- Quelle note attribueriez-vous au temps de connexion ?
- Quelle note attribueriez-vous au débit de transmission ?

Les réponses à ces questions sont les mêmes que celles décrites pour la question portant sur l'appréciation globale de la communication.

Cette liste n'est ni exhaustive ni impérative.

Dans une variante de l'invention le formulaire électronique comporte aussi une question pour situer les conditions d'utilisation du terminal 101. La question est, par exemple : Dans quelle condition la communication a-t-elle eue lieu ? Les réponses possibles sont alors, par exemple : 0 à l'aire libre, 1 en intérieur avec fenêtre, 2 en intérieur sans fenêtre, 3 depuis un étage.

Les réponses de l'utilisateur à ces questions, ou à un sous-ensemble de ces questions sont enregistrées dans le champ 107c du message de qualité créé à l'étape 201.

Dans l'étape 207 le terminal 101 interroge les circuits 112 ou des moyens de localisation équivalents. Les résultats de cette interrogation sont une latitude et une longitude qui sont enregistrées dans le champ 107a du message de qualité créé à l'étape 201. De l'étape 207 le terminal 101 passe à une étape 208 de datage dans laquelle le terminal 101 interroge les circuits 113 ou des moyens équivalents. Le résultat de cette interrogation est une date qui est enregistrée dans le champ 107b du message de qualité créé à l'étape 201. La précision d'une date est de préférence à la minute. L'invention reste pertinente si la précision est à l'heure, la seconde, la milliseconde ou une autre unité de mesure du temps.

Dans la pratique les étapes 207 et 208 peuvent intervenir à n'importe quel moment de la tentative d'établissement de communication ou de la communication. Par exemple ces étapes peuvent être mises en oeuvre juste après l'étape 201 ou N secondes après l'étape 201, N étant par exemple compris dans l'intervalle [10 ... 50] secondes.

Une fois le message de qualité créé à l'étape 201 rempli, c'est-à-dire une fois que les champs 107a, 107b, 107c et dans une variante 107d renseignés par le terminal 101, celui-ci émet le message de qualité vers le serveur 114 dans une étape 209. Un message de qualité est envoyé en mode données, par SMS ou par MMS. Une fois le message émis, la ligne correspondante dans la mémoire 107 est supprimée. L'envoi d'un message de qualité se fait donc via une ou plusieurs trames d'un protocole donné, SMS, MMS ou TCP/IP, trames dont le contenu de données est une ligne de la mémoire 107, c'est-à-dire propre à des informations correspondant à un message d qualité.

Il est possible que cet envoi de message de qualité ne soit pas immédiatement possible. Des cas d'impossibilité peuvent se trouver au moins parmi les suivants :
- tentative d'établissement de communication dans une zone non couverte par le réseau de téléphonie mobile,
- interruption de la communication pour cause de perte de réseau suivie d'une impossibilité de se connecter à nouveau au réseau.

On note ici que ces cas de détection sont particulièrement intéressants et non détectables par l'état de la technique. En effet l'invention permet donc de cartographier les zones non couvertes par un réseau de téléphonie dans lesquelles des abonnés à ce réseau ont besoin d'émettre des appels. L'invention permet même de classer ces zones en fonction du nombre de tentatives d'établissement de communication par zone.

Dans ces cas, les messages de qualité correspondant à chaque tentative d'établissement d'une communication sont enregistrés dans la mémoire 107 et envoyé l'un après l'autre dès que possible au serveur 114. Cela redevient possible dès que le terminal 101 est à nouveau connecté à un réseau de téléphonie mobile. L'envoi des messages de qualité est automatisé et ne requiert pas d'intervention de l'utilisateur. Dans la pratique le contenu d'une ligne de la mémoire 107, correspondant à un message de qualité, est encapsulé dans une ou plusieurs trames, et plus particulièrement dans la partie données de ladite trame, du protocole de communication utilisé pour transmettre le message de qualité. De tels protocoles sont par exemple les protocoles SMS, MMS, ou TCP/IP, la liste n'étant pas exhaustive. Une telle trame comporte un en-tête comportant lui-même au moins un identifiant de l'émetteur.

Dans l'invention, s'il faut qu'il y ait eu une tentative d'établissement d'une communication pour que le formulaire soit présenté à l'utilisateur, cette présentation n'est pas forcément systématique pour chaque tentative d'établissement d'une communication. Ainsi la présentation d'un formulaire, et donc la production et l'émission d'un message de qualité, sont soumis à une période exprimée soit en temps, soit en nombre de tentatives d'établissement d'une communication. Par exemple on présentera au maximum un formulaire par heure à l'utilisateur. Dans un autre exemple on présente le formulaire une fois toutes les trois tentatives d'établissement de communication. Il est bien entendu aussi possible de présenter le formulaire à toutes les tentatives d'établissement d'une communication.

Enfin le client pourra paramètrer lui-même la périodicité, le fait déclenchant ou le créneau horaire avec lesquels il va être interrogé.

La figure 3 montre une étape 301 dans laquelle le serveur 114 reçoit un message de qualité produit par un terminal mettant en oeuvre le procédé selon l'invention. Le message de qualité est enregistré, pour archivage, dans une mémoire du serveur 114, ou dans une mémoire à laquelle le serveur 114 a accès.

Une fois le message de qualité enregistré le serveur 114 passe à une étape 302 de vérification de cohérence. Une vérification de cohérence se fait, par exemple par rapport à l'identité du client. L'archivage des messages de qualité et l'identifiant contenu dans l'en-tête de la trame contenant le message de qualité, permettent en effet d'associer audit identifiant une note de fiabilité. Cette note reflète l'importance qu'il faut attacher au contenu du message. Par exemple si un utilisateur, correspondant à un identifiant, ne renvoie que des messages de qualité comportant de mauvaises notes, ou que des messages de qualité comportant des notes excellentes, alors il n'est plus pertinent de prendre en compte ses messages de qualité.

Une autre vérification de pertinence se fait, par exemple, sur le rapport entre le MOS ou le FER et l'appréciation du client, ou plus généralement entre un éventuel décalage important entre l'appréciation du client et les mesures techniques. Si les mesures techniques sont excellentes et que l'appréciation du client est très mauvaise alors le message n'est pas pertinent.

Les messages jugés pertinents sont alors traités dans une étape 303 par le serveur 114. Un traitement correspond, par exemple, à un envoi d'un message d'alerte à une équipe d'intervention. Un tel message d'alerte est envoyé, par exemple, si une ou plusieurs opinions négatives sont reçues pour une même zone géographique.

Un autre traitement possible est la production d'un rapport comportant une moyenne des appréciations par marque et modèle de terminal.

Avec l'invention il est possible de déterminer à quoi correspond techniquement une perception positive d'un utilisateur. Cela permet d'optimiser les interventions sur un réseau en ne cherchant pas à obtenir des performances techniques non demandées par les utilisateurs.

En remplacement de mesures terrain, un lancement sur, par exemple, 30000 terminaux paraît suffisant. Le parce réellement utile sera donné par une analyse statistique sur les premiers échantillons en fonction du niveau de qualité mesuré, des remontés inexploitables, etc. ....

### Abréviations

RXLEV: niveau de puissance sur la voie radio descendante GSM (mesure RSSI du champ reçu, effectuée par le mobile et codée sur 6 bits pas pas de 1 db).

RSSI: mesure quantitative, effectuée par un récepteur, du niveau de champ reçu sur un canal GSM.

RXQUAL: niveau de qualité sur la voie radio descendante GSM liée à la transmission des bits sur l'interface radio (mesure codée sur 3 bits de qualité du signal reçu par estimation du taux d'erreur bit BER permettant d'apprécier le C/I).

FER: taux d'erreur trame rejeté après détection d'erreurs.

MOS: quantité correspondant à une synthèse de plusieurs grandeurs physiques mesurées par le terminal.

IMEI: Identité internationale d'un terminal. En GSM les 6 premiers bits (TAC) fournissent le type de terminal.

"Hand-over": mécanisme grâce auquel un mobile peut transférer sa connexion d'une station de base à une autre, ou sur la même station de base d'un canal à un autre.

SIM: (USIM en troisième génération) Carte microcircuit s'insérant dans un terminal GSM et contenant au moins toutes les informations d'abonnement et le cas échéant des programmes ou fichiers stockés.

## Revendications

1. Procédé de mesure de la qualité d'une communication mise en oeuvre à partir d'un terminal (101) connecté à un réseau (111) de téléphonie mobile **caractérisé en ce que**:
- le terminal détecte (201) une tentative d'établissement d'une communication depuis, ou vers, ledit terminal,
- le terminal soumet (206), à la fin de la communication ou de la tentative d'établissement de communication, un formulaire électronique à l'utilisateur du terminal, ledit formulaire permettant la saisie de l'appréciation de l'utilisateur relativement à la communication,
- le terminal insère (206) les informations issues du remplissage du formulaire dans un message de qualité,
- le terminal émet (209) le message de qualité vers un serveur de gestion de la qualité du réseau de téléphonie.

2. Procédé selon la revendication 1 **caractérisé en ce que** le terminal insère (207) dans le message de qualité une information de localisation du terminal au moment de la communication.

3. Procédé selon l'une des revendications 1 ou 2, **caractérisé en ce que** le terminal insère (208) dans le message de qualité une information de date de production dudit message de qualité.

4. Procédé selon l'une des revendications 1 à 3, **caractérisé en ce que** le formulaire électronique comporte une information relative à l'appréciation de la communication par un utilisateur du terminal selon laquelle la communication a été ou non réussie et/ou maintenue, le contenu de ce champ étant inséré par le terminal dans le message de qualité.

5. Procédé selon l'une des revendications 1 à 4, **caractérisé en ce que** le formulaire électronique comporte une information relative à l'appréciation de la communication par un utilisateur du terminal selon la perception de l'utilisateur sur une échelle comportant au moins 2 échelons.

6. Procédé selon l'une des revendications 1 à 5, **caractérisé en ce que** le formulaire électronique comporte une information relative à l'appréciation par l'utilisateur de la synchronisation entre le son et l'image lors d'une communication de type visiophonique.

7. Procédé selon l'une des revendications 1 à 6, **caractérisé en ce que** le formulaire électronique une information relative à la situation du terminal selon qu'il est à l'aire libre, en intérieur, avec ou sans fenêtre, et ou à un étage.

8. Procédé selon l'une des revendications 1 à 7 **caractérisé en ce que** le terminal insère (205) dans le message de qualité des informations techniques relatives à la communication et mesurées et enregistrés par le terminal durant la communication.

9. Procédé selon la revendication 8 **caractérisé en ce que** les informations techniques comporte un identifiant du modèle du terminal.

10. Procédé selon l'une des revendications 8 ou 9, **caractérisé en ce que** les informations techniques sont au moins parmi la liste formée du nombre de "hand-over" durant la communication, des identifiants des cellules traversées durant la communication, du niveau RXLEV moyen, de la qualité RXQUAL moyenne, de la quantité MOS, de l'avance de temps moyenne, du pourcentage de taux FER supérieur à un seuil donné, de la duré de l'appel.

11. Procédé selon l'une des revendications 1 à 10, **caractérisé en ce que** les messages de qualité sont reçus et enregistrés (301) sur un serveur apte à produire (303) des messages d'alertes en fonction du contenu des messages de qualité.

12. Procédé selon la revendication 11, **caractérisé en ce que** pour la production des messages d'alertes le serveur écarte (302) les messages de qualité incohérents, un message incohérent étant identifiable au moins selon un des critères de la liste suivante : incompatibilité entre les mesures techniques et le résultat du formulaire, trop grande occurrence de messages de qualité négatifs issus d'un même abonné, trop grande occurrence de messages de qualité positifs issu d'un même abonné.
